# EUROPEAN PATENT APPLICATION

(11) **EP 1 600 886 A1**
(43) Date of publication of application: **30.11.2005**
(21) Application number: 04252874.5
(22) Date of filing: 18.05.2004
(51) Int. Cl.: G06K 19/00, G06F 1/16, G06F 13/38, H04M 1/00, H04N 7/14

(54) **Information processing device with expansible function module**

(71) Applicant: Aiptek International Inc., Hsin-Chu300, Taiwan (TW)
(72) Inventor: Chen, Wei-Hong, Chu-Tung Town Hsinchu (TW); Hung, Shih-Ta, Taoyuan City (TW)
(74) Representative: Pratt, David Martin

(57) **Abstract**

An information medium device (20) with an expansible function module, adaptably connected to an data access device, mainly comprises a main body (21), an external lid (22); and a first circuit module (23); wherein the main body has a plug (212) partially exposed on the external side of the main body and the main body can be connected to the data access device through the plug. The external lid is either coupled with or separated from the plug; and the first circuit module is disposed inside the external lid such that when the external lid is coupled with the main body, the information medium device has the function of the first circuit module.

## Description

### 1. FIELD OF THE INVENTION:

The present invention relates to an information medium device having an expansible function module, more particularly to an information medium device such as a USB flash disk or a MP3 player having an expansible function module such as a radio module disposed on an external lid, so that when the external lid is covered onto the USB flash disk or the MP3 player, the expanded radio function can be operated.

### 2. BACKGROUND OF THE INVENTION:

A USB flash disk is a portable memory device for carrying with large quantity of data, and its size is just like the size of a thumb. Therefore, a USB flash disk is also known as a thumb disk, a palm disk, or a mini disk. At present, the capacity of a USB flash disk primarily ranges from 32MB to 256MB, and the features of the USB flash disk include using a USB interface which gives a fast speed of transmission and supports hot plugging, and will not be damaged easily because there is no mechanical structure of a hard disk drive, thus giving excellent shockproof, breakproof, and moistureproof capabilities.

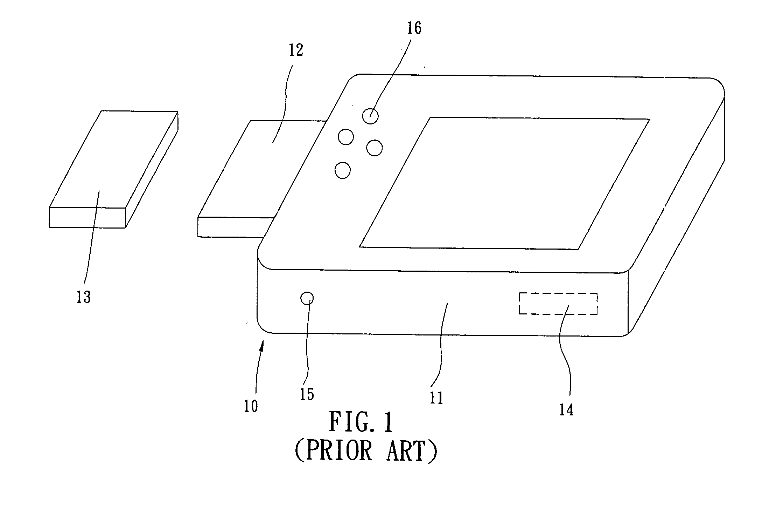

Please refer to FIG. 1 for a prior art USB flash disk with combined radio and MP3 player functions. The USB flash disk 10 comprises an information medium main body 11, a plug 12, and an external lid 13, wherein the plug 12 is disposed on the main body 11 of the information medium device and partially exposed to the exterior; the external lid 13 is either coupled with or separated from the main body 11; the external lid 13 can cover the plug 12 therein when coupling with the main body 11; and the external lid 13 is simply a lid, which covers and protects the plug 12 with no other function.

Please refer to FIG. 1 again. The USB flash disk 10 further comprises a battery 14, an earphone slot 15, and a plurality of press buttons 16. The battery 14 is disposed inside the main body 11, and the earphone slot 15 and the plurality of press buttons 16 are disposed on the surface of the main body 11. The plug 12 can be inserted into the corresponding socket of a computer for an electrical connection, when the USB flash disk 10 having the combined radio and MP3 player functions is required to access data in the computer. An earphone can be inserted into the earphone slot 15 and using the press buttons 16 to select programs or volumes when a user wants to listen to a radio program or play MP3 music. By that time, the battery 14 supplies electric power to achieve the electrical connection.

In view of the prior art USB flash disk 10 having the function of a MP3 player, although the USB flash disk 10 can integrate several functions into a system, yet it has a built-in radio and thus is classified as an electric appliance product in Europe but not as the original computer information product. Therefore, the custom duties are increased greatly; the selling price is raised; and the competitiveness is lowered. In addition, since both of the radio and the MP3 player functions are built into and cannot be separated from the USB flash disk 10, users are paying for the cost of the radio module even though they do not need the radio function. Furthermore, the originally purchased USB flash disk 10 cannot be expanded to accommodate the function of a digital camera, and thus has a limitation on the flexibility of its applications.

### SUMMARY OF THE INVENTION

The primary objective of the present invention is to provide an information medium device having an expansible function module, which disposes a radio module onto an external lid as an expanded function in order to lower the custom duties for its export and reduce its manufacturing cost. After a person skilled in the art reads this specification, the technical advantages defined in the claims of this invention or other objectives can be fully understood.

To achieve the foregoing objectives, the information medium device with an expansible function module in accordance with the present invention, adaptable for being connected to an access device, comprises a main body of the information medium device, an external lid, and a first circuit module; wherein the main body has a plug, and the main body could be the main body of a USB flask disk having the function of a MP3 player or the main body of a USB flash disk or the main body of a MP3 player. The plug is partially exposed on an external side of the main body of the information medium device so as to connect an access device with the plug. The access device could be a computer. Further, the external lid could be either coupled with or separated from the main body of the information medium device. If the external lid is coupled with the main body of the information medium device, the plug is covered by the external lid for electrically connecting to a first circuit module disposed inside the external lid to have a first expanded function.

In this embodiment, the first circuit module includes a radio module, a digital camera module, a card reader module, a MP3 module, and a language learning machine module, etc.

If the main body of the information medium device according to this embodiment is the main body of a USB flash disk having a MP3 player function, the main body comprises a second circuit module, a first battery, a first earphone slot and a plurality of press buttons. The second circuit module and the first battery are disposed inside the main body of the USB flash disk having the MP3 player function. The first earphone slot and the plurality of press buttons are disposed on the surface of the main body of the USB flash disk having the MP3 function or on the surface of the external lid. The second circuit module is connected to a switch circuit and a second joint, and the switch circuit is electrically connected with the second joint so as to switch on the switch circuit to have the second expanded function when the external lid is coupled with the main body of the USB flash disk having the MP3 player function. On the other hand, the switch circuit is switched off when the external lid is separated from the main body of the USB flash disk having the MP3 player function.

If the main body of the information medium device according to this embodiment is the main body of a USB flash disk, then the device comprises a third circuit module, a second battery, a second earphone slot, and a plurality of press buttons. The third circuit module is disposed inside the main body of the USB flash disk; the second battery is disposed inside the external lid; the second earphone slot and the plurality of press buttons are disposed on the surface of the main body of the USB flash disk or on the surface of the external lid. The third circuit module is also connected to the abovementioned switch circuit so as to switch on the switch circuit to have the third expanded function when the external lid is coupled with the main body of the USB flash disk. If the external lid is separated from the main body of the USB flash disk, then the switch circuit is switched off.

If the main body of the information medium device according to this embodiment is the main body of a MP3 player, the device comprises a fourth circuit module, a second battery, a second earphone slot, and a plurality of press buttons. The fourth circuit module is disposed inside the main body of the MP3 player; the second battery is disposed inside the external lid; the second earphone slot and the plurality of press buttons are disposed on the surface of the main body of the MP3 player or on the surface of the external lid. The fourth circuit module is also connected to the abovementioned switch circuit so as to switch on the switch circuit to have the fourth expanded function when the external lid is coupled with the main body of the MP3 player. If the external lid is separated from the main body of the MP3 player, then the switch circuit is switched off.

In this embodiment, the second joint comprises a first voltage terminal (VBUS), a plurality of data terminals (D+,D-), a second voltage terminal (VSS) and a third voltage terminal (Shielding Ground) adjacent to each other. The first voltage terminal (VBUS) and the second voltage terminal (VSS) are an anode and a cathode, respectively, and are electrically connected to the second, third, and fourth circuit modules for supplying the required electric power. The data terminals (D+,D-) and the third voltage terminal (Shielding Ground) are also electrically connected to the second, third, and fourth circuit modules for transmitting control signals.

The fourth circuit module further comprises a FM_Power signal, a USB_Ready signal, a FM_Ready signal and a USB_Reset signal for controlling the data terminals D+ and D-, and the control procedure comprises the steps of: (1) assuming the MP3 player mode having a high FM_Power signal and a low USB_Ready signal, and the FM_Ready signal is an analog-to-digital input; (2) determining whether or not it is the radio mode; if no, then set it to the MP3 player mode; (3) setting the FM_Power signal to low if it is the radio mode; and (4) measuring the voltage of the FM_Ready signal; a high voltage indicates that the fourth circuit module is not connected to the frequency modulation module and a low voltage indicates that the fourth circuit module is connected to the frequency modulation module. Then, the USB_Ready signal is used to search for channels, and the USB_Reset signal is used for resetting the frequency modulation module.

To achieve the foregoing objectives, the present invention discloses an information medium device having a plurality of external lids, which comprises a main body of an information medium device, a first external lid, and a second external lid. The information medium device is adaptable for being connected to an access device such as a computer, and the main body of the information medium device comprises a plug, partially exposed on an external side of the main body of the information medium device, and can be connected to the access device by the plug. The main body of the information medium device could be the main body of a USB flash disk having the function of a MP3 player, the main body of a USB flash disk, or the main body of a MP3 player. The first external lid has a fifth circuit module, and the second external lid has a sixth circuit module, and the fifth or sixth circuit module could be a radio module, a digital camera module, a card reader module, a MP3 player module, or a language learning machine module, etc, and the fifth and six circuit modules are two different modules.

Further, the first and second external lids could be either coupled with or separated from the main body of the information medium device. If the first or second external lid is coupled with the main body of the information medium device, then the plug can be covered by the first external lid or the second external lid to have the fifth or sixth expanded function.

The information medium device having a plurality of external lids according to this embodiment comprises a seventh circuit module, a third battery, a third earphone slot, and a plurality of press buttons. The seventh circuit module is disposed in the main body of the information medium device; the third battery is disposed inside the main body of the information medium device, or inside the first or second external lid; the third earphone slot and the plurality of press buttons are disposed on the surface of the main body of the information medium device or on the surface of the first or second external lid. The seventh circuit module is connected to a switch circuit, so that if the first or second external lid is coupled with the main body of the information medium device, the switch circuit is switched on, and if the first or second external lid is separated from the main body of the information medium device, the switch circuit is switched off.

The present invention utilizes an external lid combined with a radio module or other module, and the external lid can be either coupled with or separated from the main body of the information medium device such that the device of the invention not only has the all-in-one function, but also reduces the cost on custom duties.

### BRIEF DESCRIPTION OF THE DRAWINGS

FIG. 1 is a diagram of a prior art USB flash disk having combined functions such as a radio function and a MP3 player function.

FIG. 2 is a diagram of an information medium device having an expanded function module of a MP3 player according to a preferred embodiment of the present invention.

FIG. 3A is a circuit diagram of a second circuit module and a switch circuit according to the information medium device of a preferred embodiment of the present invention.

FIG. 3B is a circuit diagram depicting the first circuit module being connected to the first joint of the information medium device with an expansible function module according to a preferred embodiment of the present invention.

FIG. 4 is a diagram of an information medium device with a main body of a USB flash disk according to a preferred embodiment of the present invention.

FIG. 5A is a diagram of an information medium device having an expansible function module with a main body of a MP3 player according to a preferred embodiment of the present invention.

FIG. 5B is a circuit diagram of the MP3 player terminal of an information medium device having an expansible function module according to a preferred embodiment of the present invention.

FIG. 5C is a circuit diagram of the radio module terminal of an information medium device having an expansible function module according to a preferred embodiment of the present invention.

FIG. 5D is a flow chart of the program control of an information medium device having an expansible function module according to a preferred embodiment of the present invention.

FIG. 6 is a diagram of an information medium device having a plurality of external lids according to a preferred embodiment of the present invention.

### DESCRIPTION OF THE PREFERRED EMBODIMENT

To make the examiner easier to understand the objective, structure, innovative features, and function of the invention, a preferred embodiment together with accompanying drawings are illustrated for the detailed description of the invention.

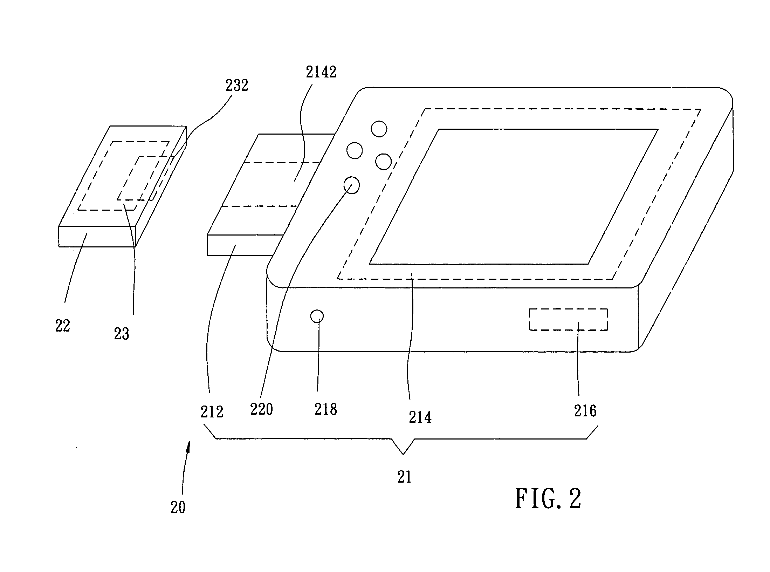

Please refer to FIG. 2 depicting an information medium device having an expansible module with a MP3 player function according to a preferred embodiment of the present invention. In FIG. 2, the information medium device 20 comprises a main body 21 of the information medium device, an external lid 22, and a first circuit module 23. The main body 21 can be connected to an access device such as a computer by a plug 212 for accessing data and providing general USB flask disk function. The plug 212 of the main body 21 is one with USB interface and is partially exposed on the external side of the main body 21, and the main body 21 is a USB flash disk with a MP3 player. The first circuit module 23 according to this embodiment is disposed inside the external lid 22, and the first circuit module 23 is such as a radio module, a recording pen module, a digital camera module, a card reader module, a MP3 player module or a language learning machine module, etc. The first circuit module 23 also adopts a USB interface to provide additional expansion functions after being coupled with the main body 21 of the information medium device. Further, the external lid 22 could be coupled with or separated from the main body 21 of the information medium device. If the external lid 22 is coupled with the main body 21 of the information medium, the plug 212 is covered inside the external lid 22 to protect the plug 212 from being damaged and enhance the overall artistic look.

Please refer to FIG. 2 again. The information medium device 20 having a MP3 player according to the present invention further comprises a second circuit module 214, a first battery 216, a first earphone slot 218, and a plurality of press buttons 220. The second circuit module 214 and the first battery 216 are disposed inside the main body 21 of the information medium device, and the first earphone slot 218 and the plurality of press buttons 220 are disposed on the surface of the main body of the information medium device. If the external lid 22 is coupled with the main body 21 of the information medium device, the first circuit module 23 inside the external lid 22 is connected to the second circuit module 214 and the first battery 216 inside the main body 21 of the information medium device through the plug 212. Users can listen and control the radio channels through the first earphone slot 218 and by selecting the press buttons 220. If the external lid 22 is separated from the main body 21 of the information medium device, then the plug 212 can be inserted into the corresponding socket of an access device (such as a computer or other electronic device with a USB interface) for accessing data.

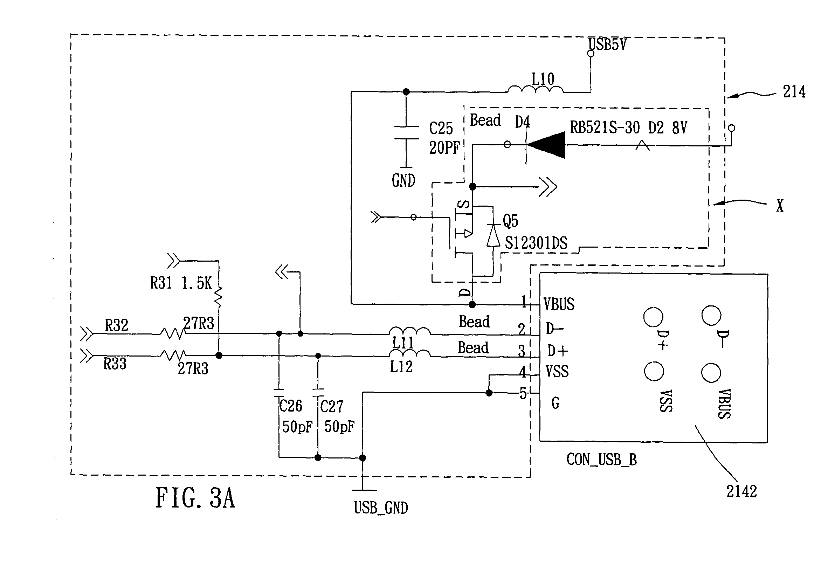

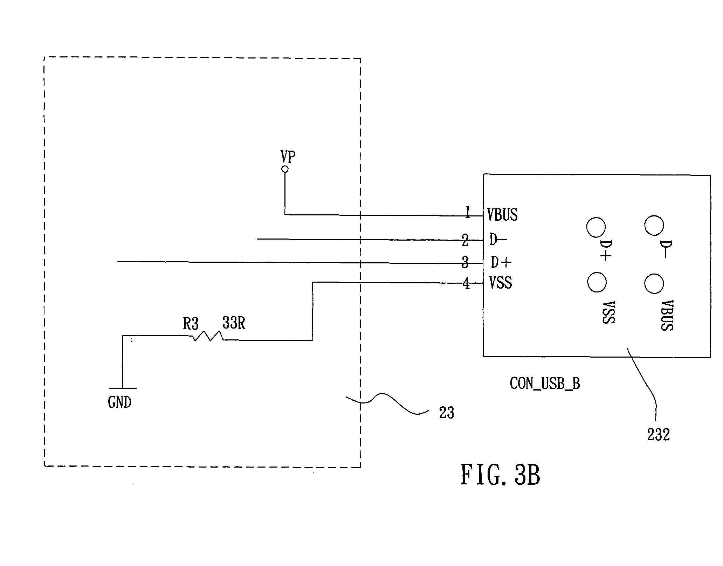

FIG. 3A shows a circuit diagram of a second circuit module and a switch circuit of the information medium device having an expansible function module according to a preferred embodiment of the present invention and FIG. 3B shows a circuit diagram depicting the first circuit module being connected to the first joint of the information medium device having an expansible function module according to a preferred embodiment of the present invention. Please refer to FIGS. 2, 3A, and 3B. The second circuit module 214 is connected to a switch circuit X and a second joint 2142; the first circuit module 23 is connected to a first joint 232; and the switch circuit X is connected to a power line VBUS in parallel and is electrically connected to the second joint 2142. If the external lid 22 is coupled with the main body 21 of the information medium device, then the second joint 2142 is electrically coupled with the first joint 232 to have a second expanded function. At this moment, the switch circuit X is electrically connected. In other words, the first circuit module 23 inside the external lid 22 and the second circuit module 214 inside the main body 21 of the information medium device are driven by the power supply of the first battery 216 to provide the radio and MP3 functions. If the external lid 22 is separated from the main body 21 of the information medium device and the second joint 2142 is inserted into the USB socket of an access device such as a computer, then the power supply of the access device will be transmitted to the second circuit module 214 through the second joint 2142 to provide the data access function of the USB flash disk. Then, the switch circuit X is electrically disconnected to prevent the first battery 216 from being affected by the power supply of the access device.

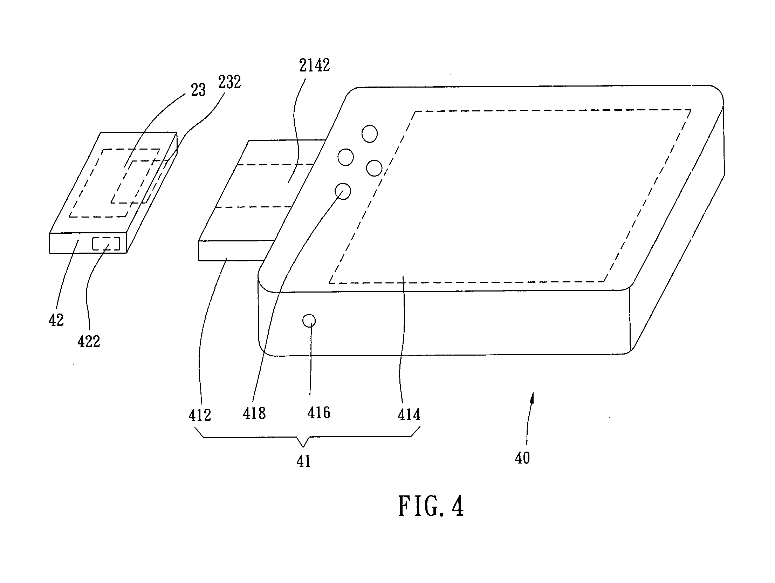

FIG. 4 shows an information medium device having an expanded function module and its main body being a USB flash disk according to a preferred embodiment of the present invention. The information medium device 40 having a main body of a USB flash disk according to this embodiment is the same as the foregoing embodiment, which comprises a main body 41 of the information medium device, an external lid 42, and a first circuit module 23. The difference from the foregoing embodiment resides on that the main body 41 of the information medium device is the main body of a USB flash disk and does not have the MP3 or other functions. The main body 41 of the information medium has a plug 412, and the first circuit module 23 is disposed inside the external lid 42, and the external lid 42 can be coupled with the main body 41 of the information medium device. If the external lid 42 is coupled with the main body 41 of the information medium device, the plug 412 is covered by the external lid 42. The information medium device 40 of this embodiment further comprises a third circuit module 414, a second battery 422, a second earphone slot 416, and a plurality of press buttons 418. The third circuit module 414 is disposed inside the main body 41 of the information medium device; the second battery 422 is disposed inside the external lid 42; and the second earphone slot 416 and the plurality of press buttons 418 are disposed on the surface of the main body 41 of the information medium device.

The third circuit module 414 also has a switch circuit X. If the external lid 42 is coupled with the main body 41 of the information medium device, then the switch circuit X will be electrically connected and will have the third expanded function. At that time, the power of the second battery 422 is supplied to provide the functions of radio and USB flash disk of the main body. If the external lid 42 is separated from the main body 41 of the information medium device, then the switch circuit X will be electrically disconnected to prevent the second battery 422 from being affected by the power supply of the access device.

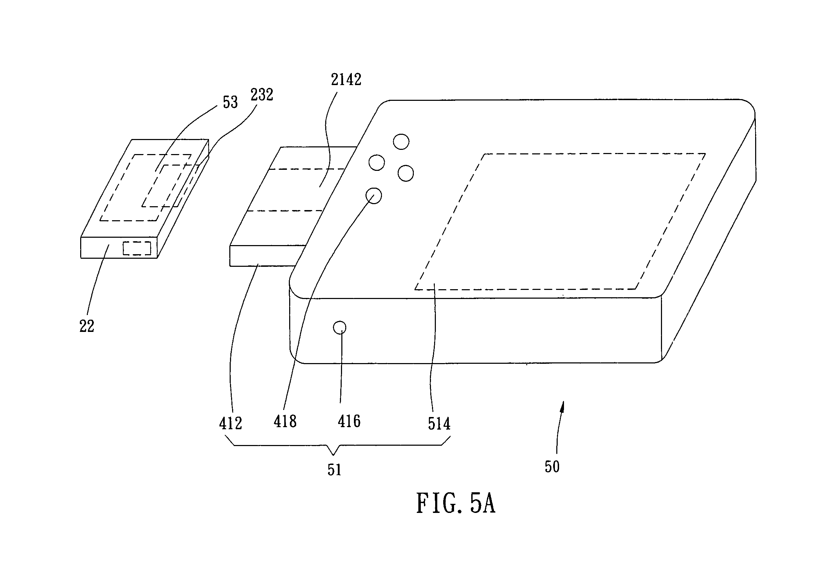

FIG. 5A shows an information medium device having an expanded function module and its main body being a MP3 player according to a preferred embodiment of the present invention. In FIG. 5A, the main body of the information medium device 50 according to this embodiment is a MP3 player, which is the same as the foregoing embodiments, and thus will not be described here. However, the only difference resides on that the main body comprises a fourth circuit module 514, and the first circuit module 232 is a radio module. If the external lid 22 is coupled with the main body 51 of the information medium device, it has the fourth expanded function of listening to radio programs.

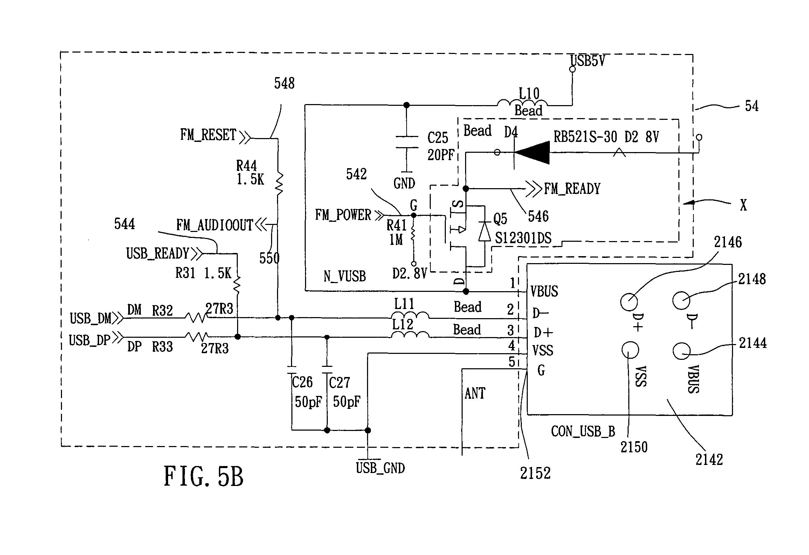

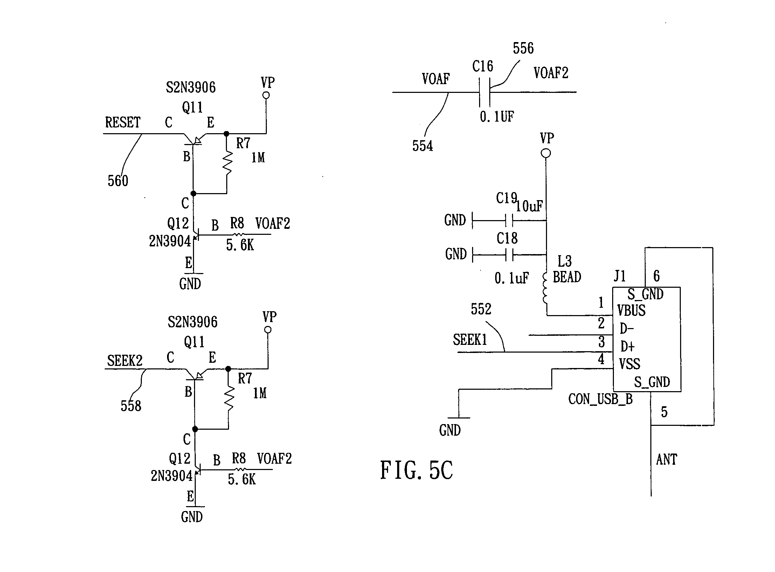

FIG. 5B shows the MP3 player terminal of an information medium device having an expanded function according to a preferred embodiment of the present invention and FIG. 5C shows the radio module terminal of an information medium device having an expanded function according to a preferred embodiment of the present invention. Please refer to FIGS. 5B and 5C at the same time. The circuit 54 of the MP3 player terminal according to this embodiment further comprises a FM_Power signal 542, a USB_Ready signal 544, a FM_Ready signal 546, and a USB_Reset signal (not shown in the figure) for controlling the data terminals D+ 2144 and D- 2146. The FM_Ready signal 546 is connected to an analog-to-digital (A/D) device to determine whether or not the radio module is connected, and the FM_Power signal 542 is used to control whether the power is supplied to the radio module. In the meantime, the USB_Ready signal 544 is used to transmit a SEEK signal, and the FM_Reset signal 548 is used to transmit a reset signal. A FM_Audio signal 550 is used as the antenna of the radio to improve the sound quality received by the radio. In addition, SEEK1 552 of the radio module terminal is a signal for controlling the radio to search for the next channel; VOAF 554 is an audio signal which is a small signal and uses C16 556 to block the direct current. If a high level signal is transmitted from the MP3 player terminal to the radio module, the radio module will be reset.

The second joint 2142 of this embodiment comprises a first voltage terminal 2144 (such as VBUS), a plurality of data terminals (D+,D-) 2146, 2148, a second voltage terminal 2150 (such as VSS) and a third voltage terminal 2152 (such as Shielding Ground). The first voltage terminal 2144 and the second voltage terminal 2150 are an anode and a cathode, respectively, electrically connected to the fourth circuit module 514 to supply the required electric power, and the data terminals (D+,D-) 2146, 2148 and the third voltage terminal 2152 is electrically connected to the fourth circuit module 514 for transmitting control signals.

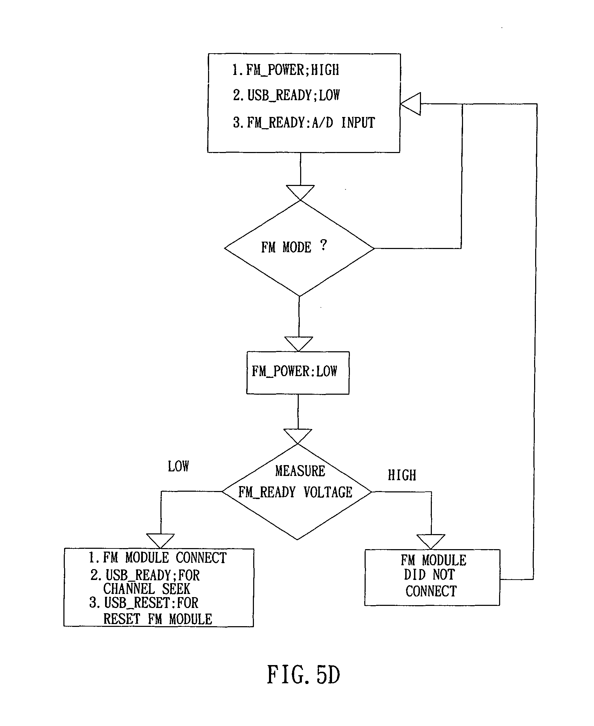

FIG. 5D is a flow chart of the program control of an information medium device having an expansible function module according to a preferred embodiment of the present invention. In FIG. 5D, the circuit of the MP3 player terminal according to this embodiment controls D+ 2144 and D- 2146 by way of a program control to transmit data or control signals. The control flow comprises the steps of: setting the normal state of the MP3 player mode having a high level FM_Power signal 542 and a low level USB_Ready signal 544, and the FM_Ready signal 546 is an analog-to-digital input; determining whether or not it is the radio mode; if no, then setting it to a MP3 player mode; if it is the radio mode, setting the FM_Power signal 542 to a low level one; measuring the voltage of the FM_Ready signal 546, and determining it as a non-radio mode if the voltage is high and as a radio mode if the voltage is low, and then the USB_Ready signal 544 is used for searching the radio channels and the USB_Reset signal is used for resetting the radio module.

The radio module of this embodiment comprises an FM Receive IC having the SEEK and RESET (552, 558, 560) functions, and the audio is a mono channel. The SEEK signal is used to search for channels; after the radio has searched a radio station, modulation will be made, and the audio signal is transmit to the MP3 player terminal for the output. If another SEEK signal is transmitted, then the IC will automatically search for the next channel with a higher frequency. After the last radio station is searched, the RESET signal 560 is used to start searching radio stations again.

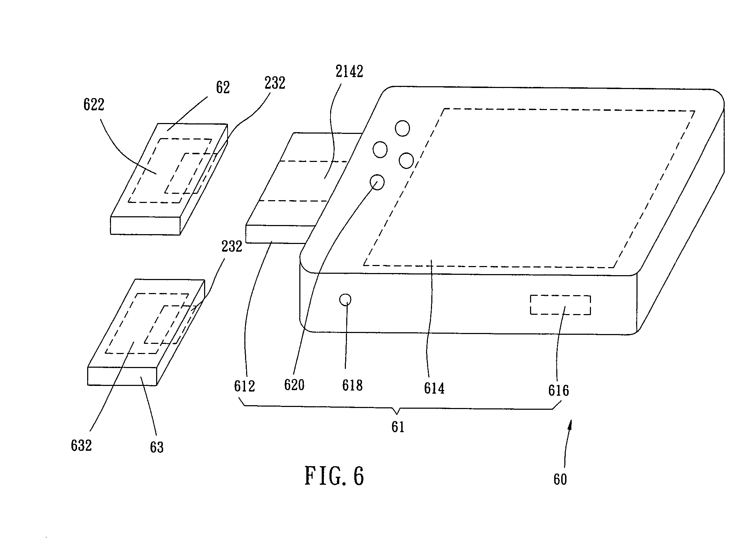

FIG. 6 shows an information medium device having a plurality of external lids according to a preferred embodiment of the present invention. In FIG. 6, the information medium device 60 having a plurality of external lids according to the present invention comprises a main body 61 of the information medium device, a first external lid 62, and a second external lid 63. The main body 61 of the information medium device is adaptably connected to an access device such as a computer. The first external lid 62 and the second external lid 63 can be coupled with the main body 61 of the information medium device, respectively, and the main body 61 can be a USB flash disk having a MP3 player function, or a main body of the single USB flash disk function only, or a main body of the single MP3 player function only. Further, the first external lid 62 has a fifth circuit module 622; the second external lid 63 has a sixth circuit module 632; the main body 61 of the information medium device has a plug 612 which is partially exposed on an external side of the main body 61 of the information medium device. If the first external lid 62 or the second external lid 63 is coupled with the main body 61 of the information medium device, then the plug 612 is covered therein to prevent the plug from being damaged.

In this embodiment, the fifth circuit module 622 or the sixth circuit module 632 could be a radio module, a digital camera module, a card reader module, or a language learning machine module, etc. It is noteworthy that the fifth circuit module 622 and the sixth circuit module 632 are two modules with different expanded functions, so that the information medium device 60 having a plurality of external lids according to the present invention just needs to change to a different first external lid 62 or second external lid 63 to have a different fifth or sixth expanded function.

In FIG. 6, the main body of the information medium device having a plurality of external lids according to this embodiment comprises a seventh circuit module 614, a third battery 616, a third earphone slot 618, and a plurality of press buttons 620. The seventh circuit module 614 and the third battery 616 are disposed inside the main body 61 of the information medium device; the third earphone slot 618 and the plurality of press buttons 620 are disposed on the surface of the main body 61 of the information medium device. Similarly, the seventh circuit module 614 according to this embodiment also has the same switch circuit X as the one described in the foregoing embodiments, so that if the first external lid 62 or the second external lid 63 is coupled with the main body 61 of the information medium device, the switch circuit X is electrically connected. If the first external lid 62 or the second external lid 63 is separated from the main body 61 of the information medium device and the main body 61 of the information medium device is connected to an access device such as a computer, then the switch circuit X is electrically disconnected.

In the descriptions of the foregoing embodiments, the circuit modules with different functions are disposed on the external lids and coupled with the main body of the information medium device to have different functions for the information medium device. However, the descriptions above are examples only, and are not intended for limiting usages of the external lid in this invention, and any person skilled in the art can use any other configurations for the external lid of this invention. Similarly, the main body of the information medium device of this embodiment could have a speaker assembly in addition to an earphone slot.

In summation of the above descriptions, the information medium device and the information medium device with a plurality of external lids according to the present invention at least have the following advantages:

1. The information medium device having an expanded function module according to the present invention disposes modules of different expanded functions on the external lid. If the external lid is coupled with the main body of the information medium device, then the information medium device will have the expanded function of the module. If the external lid is separated from the main body of the information medium device, then the information medium device has the function of storing data by the flash disk or other function such as a MP3 player function. Therefore, consumers can buy their external lid as needed without wasting money on unnecessary functions.

2. The information medium device having an expansible function module according to the present invention can use a main body of the information medium device to go with different external lids. The information medium device will have a different function and give a flexible and diversified application by just changing a different external lid.

3. The information medium device having an expansible function module according to the present invention disposes an electric appliance module onto the external lid to greatly reduce the cost of custom duties and enhance the product competitiveness.

While the preferred embodiment of the invention has been set forth for the purpose of disclosure, modifications of the disclosed embodiment of the invention as well as other embodiments thereof may occur to those skilled in the art. Accordingly, the appended claims are intended to cover all embodiments which do not depart from the spirit and scope of the invention.

## Claims

1. An information medium device with expansible function module, comprising:
a main body, having a plug disposed on one side, and said plug being partially exposed on the exterior of said main body; and
an external lid, selectively coupled with said plug of said main body,
wherein said external lid comprises a first circuit module therein for providing a first expanded function, and if said external lid is coupled with said plug of said main body, said first circuit module is electrically connected with said main body of said information medium device through said plug for executing said first expanded function of said main body of said information medium device.

2. The information medium device with expansible function module of claim 1, wherein said first circuit module is one selected from a group of a radio module, a digital camera module, a card reader module, a MP3 player module, and a language learning machine module.

3. The information medium device with expansible function module of claim 1, capable of being coupled to an access device for providing a function of accessing data.

4. The information medium device with expansible function module of claim 1, wherein said main body of said information medium device comprises at least one function selected from a group of a USB flash disk function and a MP3 player function.

5. The information medium device with expansible function module of claim 4, wherein said main body of said information medium device concurrently has a USB flash disk function and a MP3 player function, and said information medium device further comprises a second circuit module and a first battery, and said second circuit module is connected to a switch circuit and a second joint, and said switch circuit is connected to said second joint, such that if said external lid is coupled with said main body of said information medium device, then said switch circuit is electrically connected to drive said first circuit module by an electric power of said first battery.

6. The information medium device with expansible function module of claim 5, wherein said second joint comprises a first voltage terminal, a plurality of data terminals (D+, D-), a second voltage terminal, and a third voltage terminal adjacent to each other, and said first and second voltage terminals are an anode and a cathode, respectively, and are electrically connected to said second circuit module for supplying power, and said data terminals (D+, D-) and said third voltage terminal are electrically connected to said second circuit module for transmitting a control signal.

7. The information medium device with expansible function module of claim 6, wherein a FM_Power signal, a USB_Ready signal, a FM_Ready signal, and a USB_Reset signal are used to control said data terminals D+, D-, and its control flow comprises the steps of:
setting a MP3 player mode having a high level FM_Power signal and a low level USB_Ready signal, and said FM_Ready signal being an analog-to-digital input;
determining whether the mode is a radio mode; if no, then said mode is determined as a MP3 player mode;
setting said FM_Power signal to low level, if said mode is a radio mode; and
measuring a voltage of said FM_Ready signal; a high voltage indicating said device has not said first circuit module and a low voltage indicating said device has said first circuit module, and said USB_Ready signal being used for searching a channel of said radio, and said USB_Reset signal being used for resetting said first circuit module.

8. The information medium device of claim 1, wherein said external lid further comprises a second battery.

9. An information medium device having a plurality of expansible function modules, comprising:
a main body, having a plug disposed on one side, and said plug being partially exposed on the exterior of said main body;
a first external lid, having a first circuit module for providing a first expanded function and being capable of selectively coupled with said plug of said main body; and
a second external lid, having a second circuit module for providing a second expanded function and being capable of selectively coupled with said plug of said main body; thereby
when said first external lid is coupled with said plug of said main body, said main body of said information medium device is capable of executing said first expanded function by electrically connecting said first circuit module through said plug; and when said second external lid is coupled with said plug of said main body, said main body of said information medium device is capable of executing said second expanded function by electrically connecting said second circuit module through said plug.

10. The information medium device having a plurality of expansible function modules of claim 9, wherein said plug is a USB plug and adaptable for being connected to an access device with a USB interface.

11. The information medium device having a plurality of expansible function modules of claim 9, wherein said first circuit module is one selected from a group of a radio module, a digital camera module, a card reader module, a MP3 player module, and a language learning machine module.

12. The information medium device having a plurality of expansible function modules of claim 9, wherein said second circuit module is one selected from a group of a radio module, a digital camera module, a card reader module, a MP3 player module, and a language learning machine module.

13. The information medium device having a plurality of expansible function modules of claim 9, wherein said first and second circuit modules are two different modules.

14. The information medium device having a plurality of expansible function modules of claim 9, wherein said main body of said information medium device has at least one function selected from a group of a USB flash disk function and a MP3 player function.

15. The information medium device having a plurality of expanded function modules of claim 14, wherein said main body of said information medium device concurrently has a USB flash disk function and a MP3 player function, and said information medium device further comprises a third circuit module and a third battery, and said third circuit module is connected to a switch circuit, such that if said main body of said information medium device is coupled selectively with said first external lid or said second external lid, then said switch circuit is electrically connected to selectively drive said first or second circuit module by an electric power of said third battery.
